(19) Europäisches Patentamt
European Patent Office
Office européen des brevets

(11) EP 2 696 182 A1

(12) EUROPEAN PATENT APPLICATION

(43) Date of publication:
12.02.2014 Bulletin 2014/07

(51) Int Cl.:
*G01L 9/00* (2006.01)

(21) Application number: 12180139.3

(22) Date of filing: 10.08.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Nederlandse Organisatie voor
Toegepast
-Natuurwetenschappelijk Onderzoek TNO
2628 VK Delft (NL)

(72) Inventor: Nieuwland, Remco Alexander
2628VK Delft (NL)

(74) Representative: Jansen, Cornelis Marinus
V.O.
Johan de Wittlaan 7
2517 JR Den Haag (NL)

(54) **Optical sensor and method for measuring the pressure of a fluid**

(57)     Optical sensor (1) for measuring the pressure of a fluid comprises a transducer (3) with a deformable membrane to which membrane two fibre Bragg gratings (FBG) are attached, one at each side of the membrane. The sensor further comprises a tuneable small band light source (2) for providing light with a small band wavelength varying in time to the fibre Bragg gratings, a photodetector (5) for detecting light diffracted from the fibre Bragg gratings, and a timer (7) for determining at which points in time the diffracted light is detected. This optical sensor does not require a reference light source and neither a temperature sensor. The sensor can be used to measure the level of a liquid.

Method for measuring the pressure of a fluid, comprises the step of providing light with a small band wavelength varying in time to two fibre Bragg gratings attached to the opposite sides of a membrane. The method further comprises the step of detecting the light diffracted by the fibre Bragg gratings and the step of determining at which points in time the diffracted light is detected. The method can be used to measure the level of a liquid.

Fig. 1

## Description

The invention relates to an optical sensor for measuring the pressure of a fluid, comprising a transducer comprising a membrane that is deformable as a result of a difference in pressure at a first side of the membrane and a second, opposite side of the membrane.

More in particular the invention relates to such an optical sensor wherein the transducer further comprises a first fibre Bragg grating situated at the first side of the membrane in such a way that a deformation of the membrane results in a deformation of this first fibre Bragg grating, and a second fibre Bragg grating situated at the second side of the membrane in such a way that a deformation of the membrane results in a deformation of this second fibre Bragg grating. The optical sensor further comprising a light source for providing light to the first and the second fibre Bragg grating and a photodetector for detecting light coming from the first and the second fibre Bragg grating.

The invention further relates to a method for measuring a pressure of a fluid comprising the steps of providing a transducer comprising a first fibre Bragg grating situated at a first side of a deformable membrane and a second fibre Bragg grating situated at the opposite side of the membrane and subjecting one side of the membrane to a fluid pressure. The method further comprising the steps of providing source light to both fibre Bragg gratings, detecting the diffracted light that emerges from the fibre Bragg gratings, and calculating the pressure using the diffracted light.

### State of the art

Optical sensors comprising fibre Bragg gratings for measuring the pressure of a liquid are known in the art. The use of optical sensors for determining the pressure is advantageous in for example highly explosive environments. Optical sensors are also preferred over electrical sensors in environments where electromagnetic interference might obscure the measurement or the transfer of measurement data.

Fibre Bragg gratings (FBGs) are optical fibres comprising a periodic grating structure which grating diffracts the light falling on it. The effect of such a grating is that light with a small bandwidth around a specific wavelength is diffracted backwards in the fibre in the direction of the source of the light. The wavelength of the diffracted light is determined by the characteristic periodic distance of the grating and the refractive index of the fibre material. The grating periodic distance will change when such a fibre is stretched, compressed or bent, and consequently also the characteristic wavelength, the so called Bragg wavelength, will change. This property allows fibre Bragg gratings to be favourably used in pressure sensors.

Temperature variations of the fibre will result in a change of the length of the fibre and therefore of the grating distance, and in a change of the refractive index of the material. Therefore, the Bragg wavelength of the grating will not only depend on the force that is exerted on the fibre but also on the temperature. In particular if the pressure has to be measured during a long time, a temperature variation will introduce errors in the pressure measurement. To solve the problem of the temperature dependence of Bragg gratings, most of the optical pressure sensors comprising a fibre Bragg grating also comprise an additional temperature sensor for reference purpose. See for example US patent 6,563,970. In addition to the temperature sensor such an optical sensor requires a wavelength reference source for calibrating the sensor. So, there are several disadvantages related to such pressure sensors. A first disadvantage of such sensors according to the state of the art is that they require an additional sensor that has to be calibrated. Further, the temperature dependence of the measuring fibre Bragg grating has to be determined. Another disadvantage is that a wavelength reference source is needed, which makes the sensor expensive and the measurement of the pressure more complex.

European patent publication EP 1179727 A1 relates to an optical pressure sensor comprising fibre Bragg gratings for measuring the pressure and the density of a fluid, which sensor does not require a temperature sensor. This known optical sensor comprises two fibre Bragg gratings attached to the opposite sides of a deformable membrane. When subjected to pressure, the membrane deforms in a direction perpendicular to the surface of this membrane and the length of the two fibres will change in opposite directions. One of the fibres, and thus the respective Bragg grating, will be elongated and the other one will be shortened. The length change results in a shift of the so-called Bragg wavelength, viz. the wavelength of the light diffracted by the grating. This shift of the Bragg wavelength is used to determine the pressure. Because the two fibre Bragg gratings have the same temperature and their lengths changes are opposite, it is possible to determine the pressure independent of the temperature.

European patent application EP 1179727 further discloses an optical sensor wherein the light source has a broad band wavelength. An example of such a light source is a 1550 nm light emitting diode with a typical spectral width of 50 nm. Each of the fibre Bragg gratings of this known pressure sensor will diffract light with a small spectral width, typically about 0.2 nm. A detector and measurement electronics are used to determine the wavelength shift of both fibre Bragg gratings due to the length change caused by the fluid pressure deforming the membrane.

### Summary of the invention

An objective of the present invention is to provide an optical sensor for measuring the pressure of a fluid, which sensor is insensitive to temperature variations. It is a further objective to provide a reliable pressure sensor that does not require expensive and complex optical parts.

Theses objectives of the invention are obtained by an optical sensor for measuring the pressure of a fluid comprising

- a transducer comprising

  o a membrane that is deformable as a result of a difference in pressure at a first side of the membrane and a second, opposite side of the membrane,
  o a first fibre Bragg grating situated at the first side of the membrane in such a way that a deformation of the membrane results in a deformation of this first fibre Bragg grating,
  o a second fibre Bragg grating situated at the second side of the membrane in such a way that a deformation of the membrane results in a deformation of this second fibre Bragg grating,

- a light source for providing light to the first and the second fibre Bragg grating,
- a photodetector for detecting light coming from the first and the second fibre Bragg grating, characterised in that
- the light source is a tuneable small band light source for providing light with a small band wavelength varying in time, and in that
- the optical sensor comprises a timer for determining the points in time at which the photodetector detects the light coming from the first and the second fibre Bragg grating.

An advantage of a tuneable small band light source with a wavelength varying in time is that such a light source allows transforming the optical measurement from the wavelength domain to the time domain. In contrast to the situation where a wide band light source is used and where the grating therefore diffracts light continuously in time, each of the fibre Bragg gratings will provide a light pulse because it will only diffract light (of specific wavelength) at points in time when the wavelength of the tuneable source light equals the Bragg wavelength of that grating. The effect of transforming the measurement to the time domain is that the optical pressure sensor does not require the complex optical equipment that is required to perform measurements in the wavelength domain.

Another objective of the present invention is to provide a method for measuring a pressure of a fluid which method is easy to use.

This objective of the invention is obtained by provide a method for measuring a pressure of a fluid comprising the steps of

- providing a transducer comprising

  o a first fibre Bragg grating situated at a first side of a deformable membrane and
  o a second fibre Bragg grating situated at the opposite side of the membrane,

- subjecting one side of the membrane to a fluid pressure,
- providing source light to both fibre Bragg gratings,
- detecting the diffracted light that emerges from the fibre Bragg gratings,
- calculating the pressure using the detected light, characterised in that
- the source light has a small band wavelength varying in time, and in that
- the step of detecting diffracted light involves determining at which point in time the diffracted light is detected.

An advantage of providing source light with a small band wavelength varying in time over a continuous source of light is that the wavelength of the light coming from the source is time dependent, which means that the wavelength of the light reaching a fibre Bragg grating is related to a certain moment in time. The effect of such time dependent wavelength reaching the gratings is that the diffracted light is a light pulse because the source light is equal to the Bragg wavelength of the grating only at a certain moment in time. So, not only the source light but also the diffracted light is related to a moment in time and the measurement of the diffracted light is transferred from the wavelength domain to the time domain. The combined effect of varying the light source and measuring the time-dependency of the diffracted light is that the diffracted light can be related to the wavelength of the source and therefore that the wavelength of the diffracted light can be determined. This Bragg wavelength can be related to a pressure by calibration as known to those skilled in the art. So, this method provides an easy method for determining the pressure of a fluid.

Brief description of the figures

Figure 1    shows a schematic drawing of an embodiment of the optical pressure sensor according to the invention

Figure 2    shows an example of the time dependency of the wavelength of a tuneable light source

Figure 3    shows a schematic drawing of an embodiment of the pressure sensor according to the invention comprising a wavelength tracking device

Figure 4    illustrates a relationship between the photodetector signal and the phase of the light source for an embodiment of the pressure sensor comprising an interferometer as wavelength tracking device

Figure 5    shows a schematic drawing of an embodiment of the pressure sensor comprising multiple transducers

Figure 6    shows a schematic drawing of a transducer comprising a membrane and two fibre Bragg gratings

Figure 7    shows a preferred embodiment for a pressure sensor according to the invention, comprising multiple transducers

Figure 8    shows a schematic drawing illustrating the effect of pressure and temperature on the light reflection of the transducer

Figure 9    shows a schematic drawing of a preferred embodiment of a level sensor comprising a pressure sensor according to the invention

Detailed description of the invention

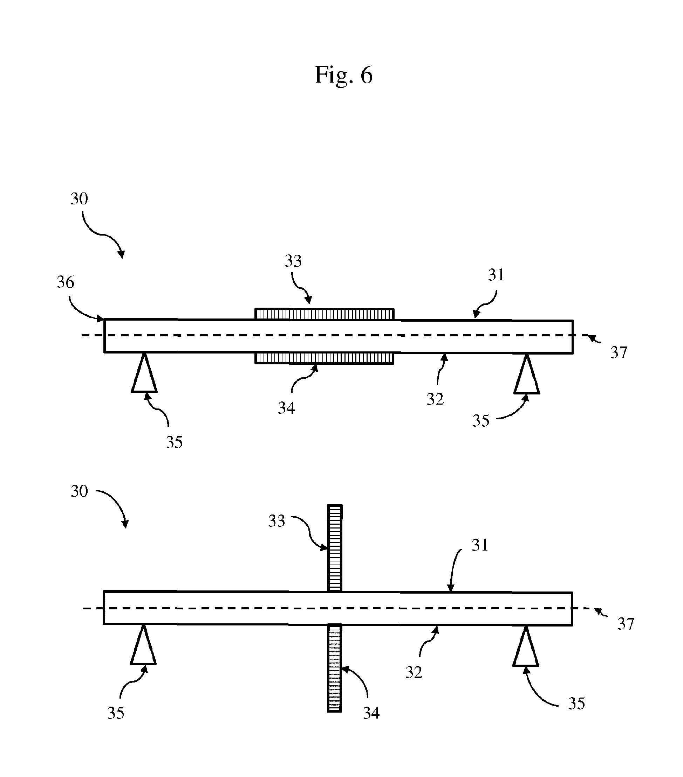

The optical pressure sensor according to the invention comprises a transducer as shown in figure 6. The transducer comprises a deformable membrane (36) which membrane is deformable when a force is exerted on it, for instance because there is a pressure difference across the membrane. The deformable membrane may be for example a membrane made from a flexible and stretchable material like a polymer or rubber. However the membrane may also be made out of metallic or ceramic foil that deforms when exposed to a pressure difference at both sides of the membrane. Preferably, the membrane is gas or liquid tight when being used for measuring the pressure of a gas or vapour or the pressure of a liquid.

The transducer further comprises two fibre Bragg gratings. A first fibre Bragg grating (33) is situated at the first side (31) of the membrane, whereas the second fibre Bragg grating (34) is situated at the second, opposite side (32) of the membrane. The fibre Bragg gratings are attached to or situated in the membrane in such a way that a deformation of the membrane results in a deformation of the fibre, more in particular in a length change, bending, or torsion of the fibre Bragg grating which length change, bending, or torsion is different for the two fibre Bragg gratings. For this purpose the fibre Bragg gratings can for example be attached to the membrane in parallel with the membrane as is shown in the upper drawing of figure 6, or perpendicularly as is shown in the lower drawing of figure 6. It will be appreciated, however, that any other geometry may be suitable provided that a deformation of the membrane affects the spacing of the grating. In particular the actual design of the housing of the transducer may result in specific positioning of the fibre Bragg gratings. The two FBGs, for example, may not be centred with respect to each other. The fibre Bragg gratings can be attached to the membrane by any suitable method, including gluing and soldering. The fibre Bragg gratings may even be incorporated in the membrane for example when the membrane is a moulded foil.

Preferably, the two fibre Bragg gratings are positioned in such a way relative to the neutral bending line (37) of the membrane that the deformation of both fibre Bragg gratings is opposite in direction. For example the upper fibre Bragg grating (33) is elongated and the lower fibre Bragg grating (34) is compressed when the pressure at the upper side of the membrane is higher than at the lower side. The two Bragg gratings may be situated in series in one optical fibre or the gratings may be situated in two separate fibres which two fibres are optically coupled to each other either with a fibre coupler or an optical switch. The deformable membrane is attached to a housing by fixation means (35) that allow the membrane to deform when subjected to pressure. It is appreciated that such fixation means may for example be clamps that are clamping both sides of the membrane, either on a limited number of points or around the whole circumference of the membrane or part of it.

A part of the housing comprising the membrane may be filled with a liquid or gas to provide a reference pressure at one side of the membrane. Such a reference pressure may for example be provided by the atmospheric pressure of the surrounding air. Alternatively, such a reference pressure may be provided by mechanical means, such as for example by a force exerted on the membrane by a spring.

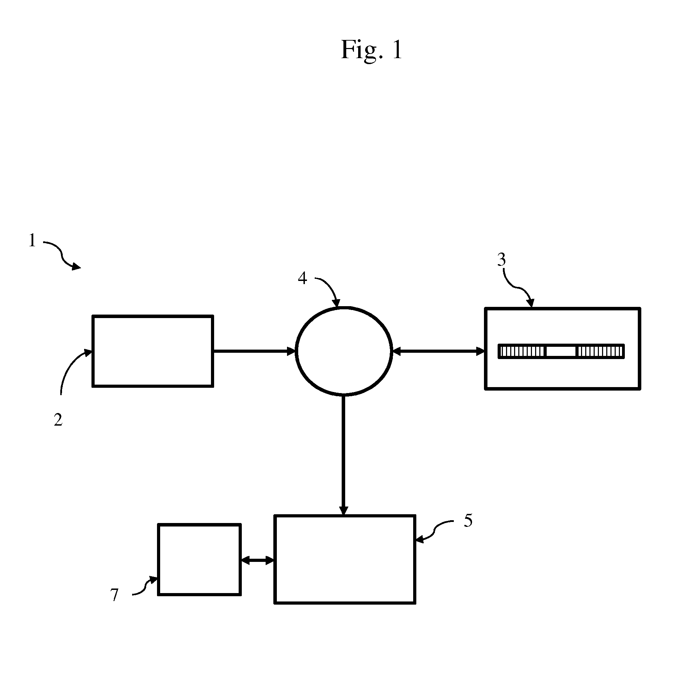

For a further description of the pressure sensor reference is made to figure 1. In addition to a transducer (3) as described above, a first embodiment of the pressure sensor (1) comprises a tuneable small band light source (2) for providing light with a small bandwidth to the fibre Bragg gratings. Such a light source may preferably be a tuneable laser, like a distributed feedback laser (DFB) or a Vertical Cavity Surface Emitting Laser (VCSEL). Such lasers may have, for example wavelengths in the range of 1530 nanometre to 1565 nanometre, the so-called C-band. However, also other wavelength ranges can be used, provided that the Bragg wavelength of the gratings lies within such a range. More in particular ranges like for example 1260 to 1675 nm or 750 to 900 nm can be used. The wavelength may be tuned within just a part of such range, typically within about 5 to 10 nanometres. The smaller the bandwidth of the light, the better the wavelength of the light is defined as a function of time. Typically, the bandwidth of the tuneable light source may be between 1 femtometre (1.0 x $10^{-15}$ m) and 100 picometre ($100 \times 10^{-12}$ m), more in particular between 5 and 10 femtometre. When reference is made to a small band light source, then such a source for providing light to the fibre Bragg gratings may comprise a light generating device generating light with a broad band wavelength, which light is filtered to provide light with a small band wavelength to the fibre Bragg gratings.

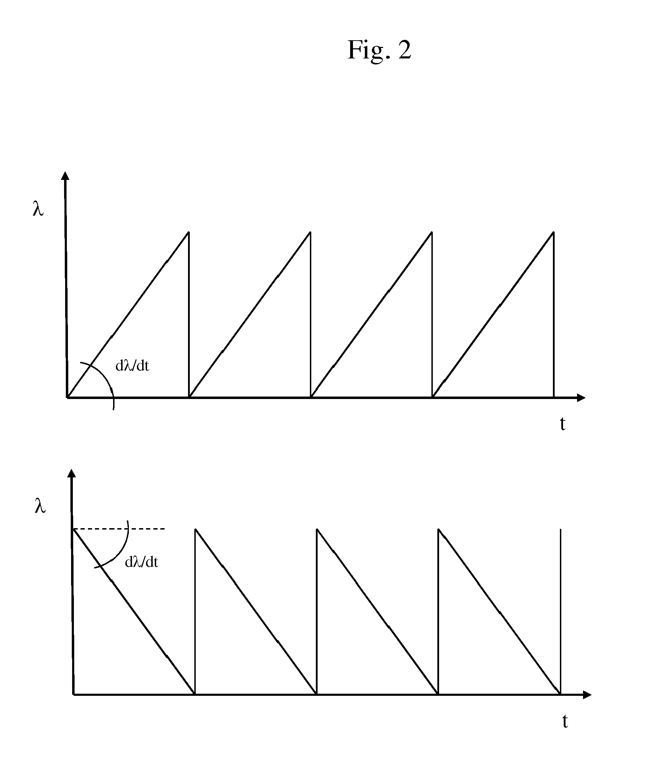

Preferably, the light source is a scanning tuneable light source, viz. a light source with a wavelength sweeping in time. Although one sweep, for example from a lower to a higher wavelength may satisfy, in practice a periodic repetition of such a sweep is preferred. Typically, the repetition frequency of the wave length sweep may be between 1 Hz and 100 kHz, which means that the repetition time $t_r$ lies between 10 microsecond ($\mu$s) and 1 s. Depending on the application and in particular when more than two fibre Bragg gratings are interrogated, the repetition frequency may be between 20 Hz and 2000 Hz. The repetition frequency may be lower, more in particular the sweeping may even be interrupted for some time, for example to save energy. Preferred is a sawtooth type of sweep as shown in figure 2. In such a sweep the wavelength $\lambda$ increases (upper drawing) or decreases (lower drawing) linearly in time and thus the time derivative $d\lambda/dt$ is constant. The advantage of such a sweep is that the difference in wavelength at two points in time is determined by the length of the time interval only. It is not relevant what the exact time is, only the time difference determines the difference in wavelength of the light source.

Referring again to figure 1, the light from the tuneable light source (2) is directed, for example via an optical fibre or waveguide, to an optical circulator (4) which optical circulator directs the light coming from the source (2) to the transducer (3) and which optical circulator also directs the diffracted light from the transducer to a photodetector (5), for example via a second optical fibre or waveguide. The photodetector may convert the optical signal into an electrical signal for further processing. However, further processing by optical means is also possible. In use, the photodetector will periodically receive light pulses from both fibre Bragg gratings. The length of the time interval between the pulses is directly correlated with the pressure difference over the membrane as will briefly explained here.

In a first order approximation, the Bragg wavelength varies linearly with the length change of the fibre and therefore with the pressure p. So the derivative $dp/d\lambda$ is constant. Knowing this constant, for example after calibration, allows to relate a difference $\Delta\lambda$ in wavelength to a difference $\Delta p$ in pressure across the membrane, viz.

$$\Delta p = (dp/d\lambda) \times \Delta\lambda.$$

Further, as explained above for a sawtooth sweeping light source, a difference $\Delta\lambda$ in wavelength can be related to a time interval $\Delta t$, using the slope $d\lambda/dt$ of the sawtooth (see figure 2), viz.

$$\Delta\lambda = (d\lambda/dt) \times \Delta t.$$

The pressure difference across the membrane is directly related to the time interval between the light pulses:

$$\Delta p = (dp/d\lambda) \times (d\lambda/dt) \times \Delta t$$

The pressure difference can directly be obtained from the measured time interval $\Delta t$, viz. the time that lapses between two points in time, because both $dp/d\lambda$ and $d\lambda/dt$ have a known value.

To measure the time interval $\Delta t$ between two points in time, this embodiment may comprise a separate timer (7). It is appreciated that the timer may also be part of the photodetector.

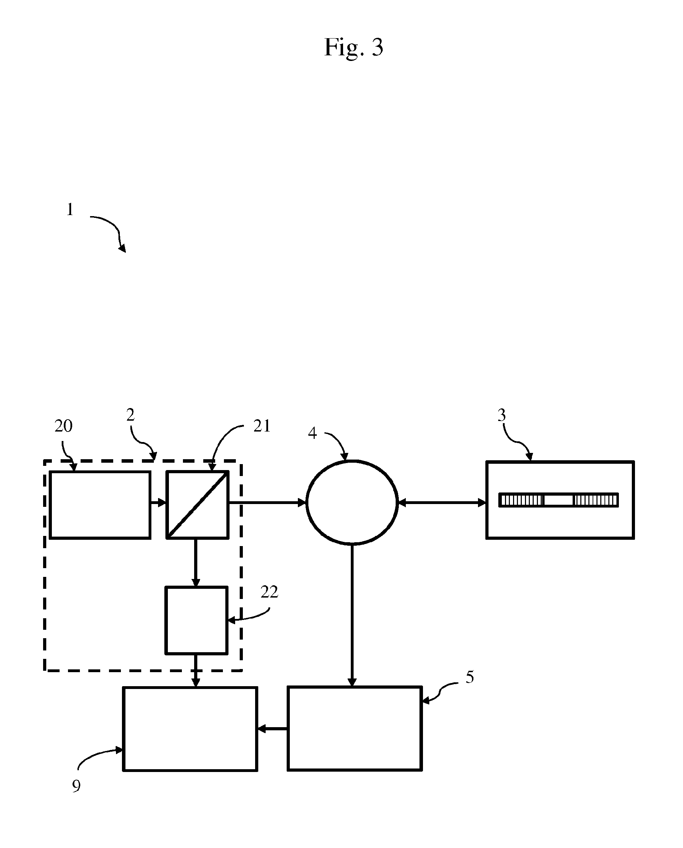

A second embodiment of the optical pressure sensor (1) as shown in figure 3 and described here in more detail, also comprises a transducer (3), a tuneable small bandwidth light source (2) and a photodetector (5). This embodiment of the pressure sensor further comprises a wavelength tracking device (22) for determining the wavelength of the tuneable small band light source or a parameter representative of the wavelength as a function of time. Such a wavelength tracking device preferably is an interferometer. In this embodiment the light coming from a light generating device (20), for example a laser, is sent to a coupler or splitting device (21) that splits the light into two parts. A first part of the light is sent to the wavelength tracking device, whereas another part of the light is sent to the transducer (3) via the circulator (4).

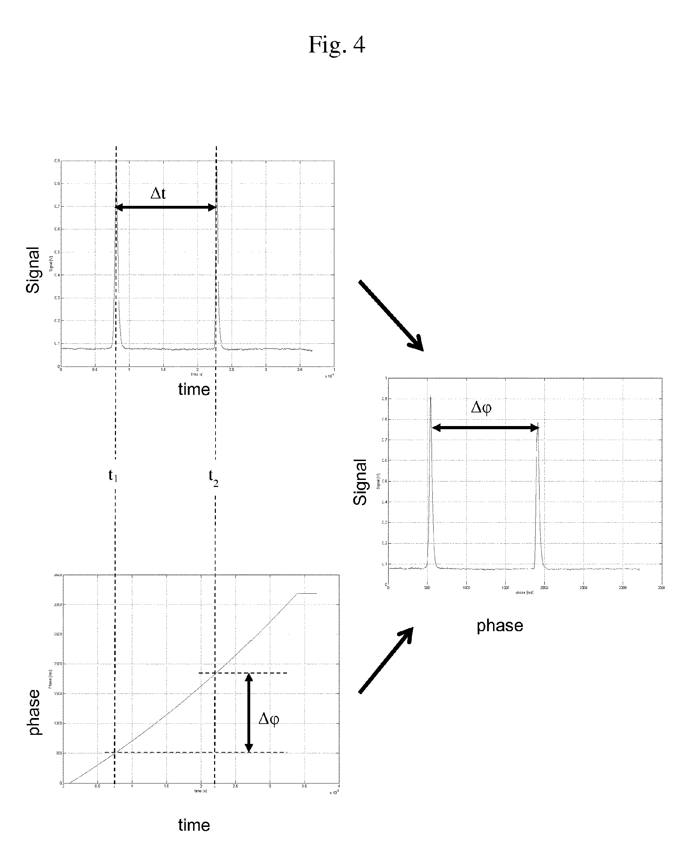

With this second embodiment of the pressure sensor both the signal of the photodetector and the signal of the interferometer, more in particular the phase of the light, are measured as a function of time. Typical examples of such signals as a function of time are shown in figure 4. At the top left is shown the signal that is representative for the intensity of the light falling on the photodetector and at the bottom left is shown the phase of the light as measured with the interferometer. The common time axis allows combining both graphs to obtain the relationship between the photodetector signal and the phase of the light source as shown at the right side of figure 4. So, the time interval $\Delta t$ between the two pulses is transformed into a phase difference $\Delta\varphi$.

The relationship between the phase $\varphi$ of the interferometer signal and the wavelength $\lambda$ of the light is given by

$$\varphi = 2\pi \times opd / \lambda$$

where $opd$ is the optical path length difference of the interferometer.

The relationship between the difference $\Delta\lambda$ in wavelength and the phase difference $\Delta\varphi$ is given by

$$\Delta\lambda = \lambda^2 \times \Delta\varphi / (2\pi \times opd)$$

As described above for a first embodiment, knowing the difference in wavelength Δλ allows determining the pressure difference across the membrane. In contrast to the first embodiment where the wavelength shift can be obtained straightforwardly from a detected time interval Δt, obtaining the wavelength shift in this embodiment requires that the measured phase and the signal of the photodetector are combined on a common time axis as illustrated in figure 4. The wavelength shift can be determined by using the formula for Δλ given above, or by

$$\Delta\lambda = \lambda(t_2) - \lambda(t_1)$$

where $t_1$ and $t_2$ indicate the points in time of detecting the first and second peak, respectively and where $t_2 = t_1 + \Delta t$.

The second embodiment further comprises a processor unit (9) for processing the signals from the photodetector (5), which photodetector receives light diffracted by the fibre Bragg gratings, and the wavelength tracking device (22) in order to calculate the pressure as indicated above. The timer for determining at which points in time the diffracted light is detected by the photodetector may be part of the processor unit, the wavelength tracking device, or the detector. The timer may also be a separate device connected with the photodetector. More in particular the processor unit may also store the signals and other data, like for example data related to the calibration of the sensor and data related to specific properties of the wavelength tracking device, like for example the optical path length difference of an interferometer. The embodiment comprising the wavelength tracking device may preferably be used in practise because it does not rely on ideal properties of the light source, viz. a very stable sweeping light source both in terms of light intensity and the linearity dλ/dt of the wavelength sweep.

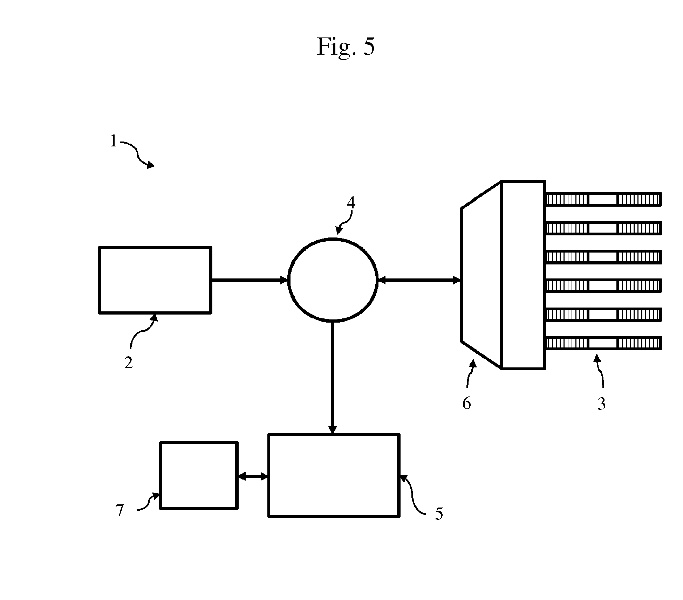

A third embodiment of the optical pressure sensor (1) as shown in figure 5 and described here in more detail, also comprises a tuneable small bandwidth light source (2), a photodetector (5) and a timer (7). This embodiment of the pressure sensor, however, comprises at least two transducers (3) to determine the pressure of a fluid at more than one position. In this embodiment of the invention, multiple transducers of the type as shown schematically in figure 6 and describe above, are connected to an optical switch (6) that can direct the light from the tuneable light source to each of the transducers, or to each of the fibre Bragg gratings of the transducers. In addition, this switch (6) allows to interrogate each of the transducers or fibre Bragg gratings by directing the diffracted light via the optical circulator (4) to the photodetector (5). The optical switch allows the use of only one light source (2) for all the transducers. The light source (2) may for example be a perfect sawtooth source as shown in figure 2 or it may comprise a wavelength tracking device as shown in figure 3. Depending on the application of the pressure sensor, it may comprise two, three, four or five or more transducers or even ten to twenty or more. Some of the fibre Bragg gratings or even all of them may be situated on one and the same optical fibre. The number of gratings on a single fibre, however, may be limited by the wavelength tuning range of the small band light source, the dynamic range of the transducers, and other optical properties of optical parts of the sensor. Further, the number of optical fibres may depend on the specific geometry, for example the size, of the container containing the fluid.

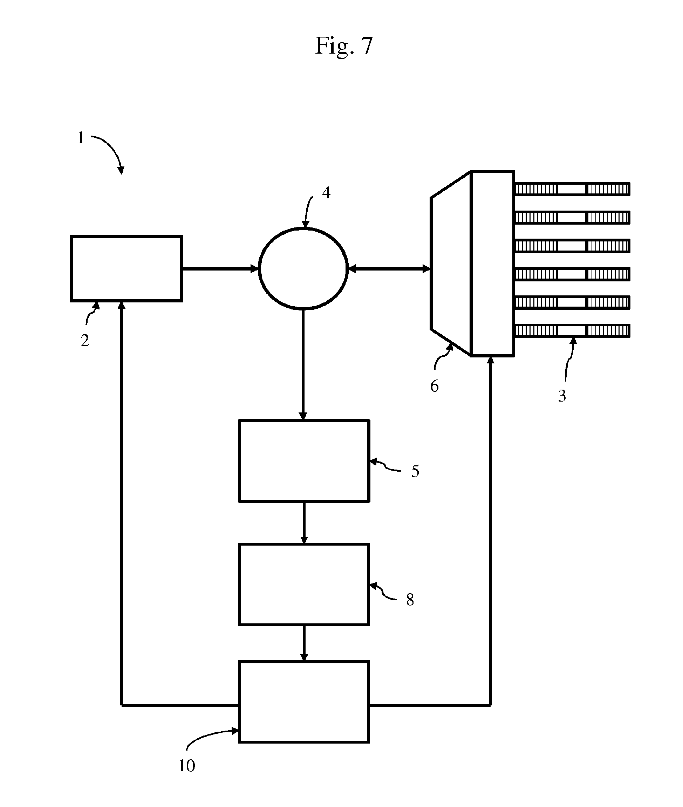

A fourth embodiment of the optical pressure sensor (1), as shown in figure 7, also comprises a tuneable small band light source (2), a photodetector (5), more than one transducer (3) and a switch (6) to select a particular fibre Bragg grating or set of fibre Bragg gratings. This embodiment of the pressure sensor further comprises additional control optics or control electronics. More in particular, this embodiment of the pressure sensor comprises an AD (analogue to digital) convertor (8) for converting the output signal of the photodetector (5) into a digital signal for control purpose as described hereafter. The output signal of the AD convertor is supplied to a control unit (10) for controlling the optical switch (6) that selects the transducer or fibre Bragg grating that has to receive light and that has to be interrogated. The controller further controls the tuneable light source (2). The controller may comprise the timer for determining at which the points in time the diffracted light is detected. However, the timer may also be incorporated in the detector or the timer may be a separate device connected with the photodetector. More in particular the controller controls the wavelength sweep of the light source and handles the time difference to pressure conversion for each individual transducer. Here again it is appreciated that the light source 2 may comprise a wave length tracking device, like for example an interferometer, as shown in figure 3. Further, it may comprise a processing unit, which processing unit may be part of the control unit (10).

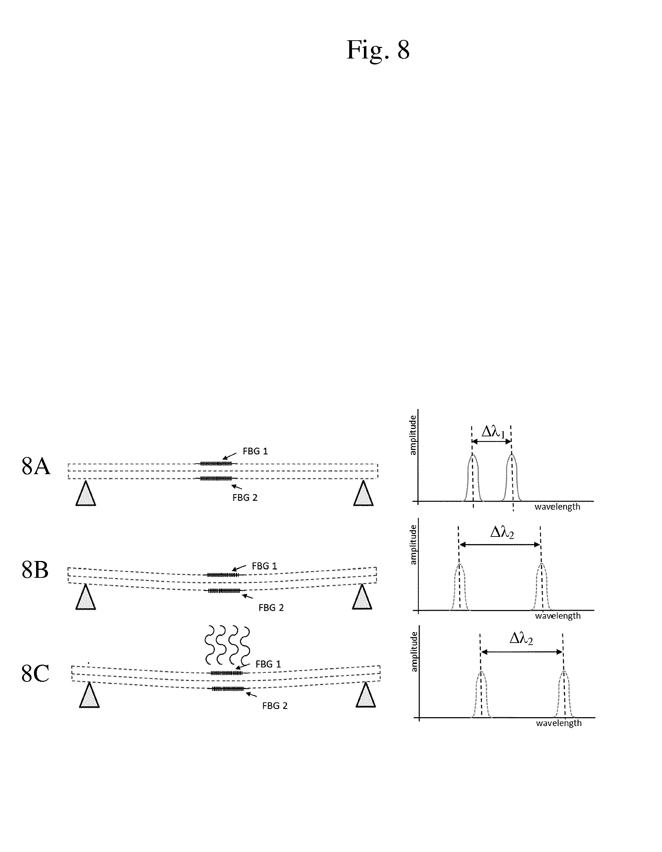

An embodiment of the method for measuring a pressure of a fluid in accordance with the invention is now described with reference to figure 8. In this embodiment of the method, a transducer as shown schematically in figure 6 is provided. Such a transducer is shown in figure 8A in the situation that there is no pressure difference between both sides of the membrane. The Bragg wavelength of the two fibre Bragg gratings may not be identical and consequently the diffracted light coming from the two different fibre Bragg gratings will be different as is illustrated by the two peaks in the wavelength domain (see right hand side of figure 8A). Although both peaks in figure 8 have the same amplitude, this needs not to be the case in practice. It is appreciated that the method for measuring the pressure of a fluid according to the invention does not require that the intensity of the light, that is the amplitude in figure 8, is measured or known. Variations of the light intensity will have no effect on the measured pressure. This makes the method easy and reliable.

One side of the membrane may be subjected to a fluid pressure. Preferably, the membrane is in direct contact with the fluid to be measured. However, it is also possible to use an intermediate fluid or mechanical means to provide the pressure of the fluid to the membrane. The fluid pressure to be measured may be higher or lower than the pressure at the other, opposite side of the membrane. Where reference is made to a pressure at the side of the membrane not exposed to the fluid pressure to be measured, such a pressure can also be provided for example by a force exerted on the membrane by for example mechanical means.

Light from the tuneable small band wavelength source, which wavelength is varying in time, is provided to the fibre Bragg gratings of the transducer. Preferably the light source sweeps periodically between a lower wavelength and a higher wavelength. Due to the deformation of the membrane and consequently the deformation of both fibre Bragg gratings, the Bragg wavelengths may shift as indicated in figure 8B. Because the deformation of the two fibre Bragg gratings is different, the shift of the two peaks in the wavelength domain will be different for the two fibre Bragg gratings. This means that both peaks will shift relative to the original situation (8A) in which no a pressure difference was present. Moreover, also the distance between the two peaks will change from $\Delta\lambda_1$ to $\Delta\lambda_2$.

The light diffracted by both fibre Bragg gratings is detected by a photodetector which may be any type of photodetector for detecting the light having the wavelength of the diffracted light. Each of the fibre Bragg gratings will only diffract light when the light source provides light with the proper wavelength, viz. the Bragg wavelength of the grating at the moment of measurement. Because the wavelength of the light source is varying in time, the fibre Bragg gratings will only diffract light at certain moments in time, corresponding to the moment in time that the source provides the proper wavelength. In other words, the measurement is transferred from the wavelength domain to the time domain. So, by measuring the time difference between the peaks, one obtains information about the relative deformation of the two fibre Bragg gratings. Subsequently, the pressure of the fluid can be calculated using a reference measurement in which the time difference between the peaks is measured as a function of a known fluid pressure.

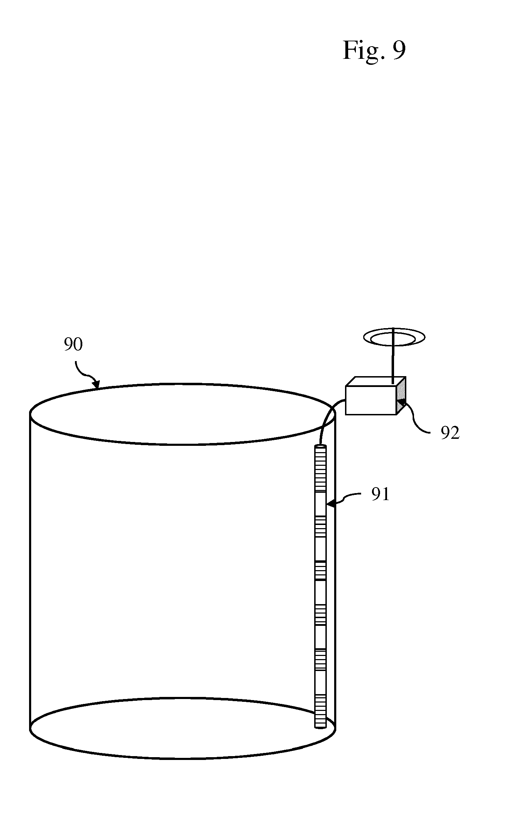

The pressure sensor and the method for measuring the pressure of a fluid can advantageously be used for measuring the level of a liquid in a liquid container like vessels for liquid segregation purposes in which for example the location of a water oil interface can be accurately determined, as will be discussed with reference to figure 9. Because the pressure sensing, more in particular transducing the pressure into a signal representative for the pressure, is based on optics and does not involve electrical signals, the use of this pressure sensor and measuring the pressure may be preferred in for example explosive environments or in highly electrically conductive liquids.

In a preferred embodiment of the pressure sensor for use as a level sensor, the sensor comprises a number of transducers positioned along a line at known distances. The sensor can be placed in a vessel (90) such that the transducers form a column (91). The difference in pressure measured at the different positions allows to determine the level of the interface between segregated liquids if the density of the different phases are known. The fibre Bragg gratings may be situated in series on only one optical fibre, as is shown in figure 9, provided that the wavelength tuning range of the optical source can accommodate the number of transducers and the dynamic range per transducer. Alternatively, the fibre Bragg gratings may be situated on different fibres which is the preferred embodiment of the invention. The optical parts (92) of the sensor, more in particular the tuneable light source, the optical circulator, the optical switch and the photodiode may be situated on or close to the vessel, whereas the electrical control equipment, including for example the timer, can be placed elsewhere being connected either by optical fibres or electrical wires, or wirelessly.

A further advantage of the pressure sensor and the method for measuring a pressure according to the invention is that a variation of temperature need not to be compensated for. So, there is no need for an additional sensor for measuring the temperature in order to correct for temperature variations of the fibre Bragg gratings. This is illustrated by reference to figures 8B and 8C. If the transducer of figure 8B is subject to a temperature variation, both peaks will shift to a higher or a lower wavelength due to the thermo-optic effect combined with the elongating of the fibre due to thermal expansion. However, the distance $\Delta\lambda_2$ between the two peaks will not change provided that there is no temperature gradient between both sides of the membrane. This condition can be fulfilled by choosing a membrane material which is either a good conductor or a membrane thickness very small with respect to the liquid on one side of the membrane. So, the measurement of the pressure according to the invention is not influenced by a temperature change because such a change does not affect the measurement that is performed in the time domain.

## Claims

1. Optical sensor (1) for measuring the pressure of a fluid comprising

   - a transducer (3) comprising

     o a membrane (36) that is deformable as a result of a difference in pressure at a first side (31) of the membrane and a second, opposite side (32) of the membrane,

o a first fibre Bragg grating (33) situated at the first side of the membrane in such a way that a deformation of the membrane results in a deformation of this first fibre Bragg grating,

o a second fibre Bragg (34) grating situated at the second side of the membrane in such a way that a deformation of the membrane results in a deformation of this second fibre Bragg grating,

- a light source (2) for providing light to the first and the second fibre Bragg grating,
- a photodetector (5) for detecting light coming from the first and the second fibre Bragg grating, **characterised in that**
- the light source is a tuneable small band light source for providing light with a small band wavelength varying in time, and **in that**
- the optical sensor comprises a timer (7) for determining the points in time at which the photodetector detects the light coming from the first and the second fibre Bragg grating.

2. Optical sensor according to claim 1 wherein the bandwidth of the small band wavelength is between 1 femtometre and 100 picometre.

3. Optical sensor according to claim 1 or 2 wherein the wavelength lies within the C-band.

4. Optical sensor according to any of the preceding claims wherein the light source (2) is suitable for providing light with a wavelength having a sawtooth variation in time.

5. Optical sensor according to any of the preceding claims wherein the light source (2) comprises a wavelength tracking device (22) for determining the wavelength of the light source as a function of time.

6. Optical sensor according to any of the preceding claims comprising at least two transducers (3) and further comprising an optical switch (6) for directing light to any of the transducers.

7. Optical sensor according to claim 6 comprising a control unit (10) for controlling the optical switch (6) and the light source (2).

8. Optical sensor according to claim 7 wherein the transducers are positioned at known distances for use as a level sensor.

9. Method for measuring a pressure of a fluid comprising the steps of

- providing a transducer comprising

o a first fibre Bragg grating situated at a first side of a deformable membrane and
o a second fibre Bragg grating situated at the opposite side of the membrane,

- subjecting one side of the membrane to a fluid pressure,
- providing source light to both fibre Bragg gratings,
- detecting diffracted light that emerges from the fibre Bragg gratings,
- calculating the pressure using the detected light,
**characterised in that**
- the source light has a small band wavelength varying in time, and **in that**
- the step of detecting diffracted light involves determining at which point in time the diffracted light is detected.

10. Method according to claim 9 comprising the step of measuring the phase of the light coming from the light source as a function of time in order to relate the diffracted light to the phase of the source light.

11. Method according to claim 9 or 10 comprising the step of providing two or more transducers, preferably five or more.

12. Method according to claim 11 comprising the step of providing said transducers at known distances for measuring the level of a liquid.

Fig. 1

# Fig. 2

Fig. 3

Fig. 4

Fig. 5

## Fig. 6

Fig. 7

# Fig. 8

Fig. 9

Europäisches
Patentamt

European
Patent Office

Office européen
des brevets

**EUROPEAN SEARCH REPORT**

Application Number

EP 12 18 0139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 1 179 727 A1 (ABB RESEARCH LTD [CH]) 13 February 2002 (2002-02-13) * the whole document * ----- | 1-12 | INV. G01L9/00 |
| Y | YUN S H ET AL: "INTERROGATION OF FIBER GRATING SENSOR ARRAYS WITH A WAVELENGTH-SWEPT FIBER LASER", OPTICS LETTERS, OSA, OPTICAL SOCIETY OF AMERICA, WASHINGTON, DC, US, vol. 23, no. 11, 1 June 1998 (1998-06-01), pages 843-845, XP000766576, ISSN: 0146-9592 * the whole document * ----- | 1-12 | |

TECHNICAL FIELDS
SEARCHED    (IPC)

G01L

The present search report has been drawn up for all claims

| Place of search | Date of completion of the search | Examiner |
|---|---|---|
| The Hague | 24 January 2013 | Amroun, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 18 0139

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2013

| Patent document cited in search report | | Publication date | Patent family member(s) | Publication date |
|---|---|---|---|---|
| EP 1179727 | A1 | 13-02-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6563970 B
- EP 1179727 A1
- EP 1179727 A